# EUROPÄISCHE PATENTANMELDUNG

(11) **EP 4 481 677 A1**
(43) Veröffentlichungstag der Anmeldung: **25.12.2024**
(21) Anmeldenummer: 23180724.9
(22) Anmeldetag: 21.06.2023
(51) Int. Cl.: G06T 7/00

(54) **VERFAHREN ZUR QUALITÄTSPRÜFUNG AN EINER SIEGELNAHT**

(71) Anmelder: SÜDPACK Medica AG, 6340 Baar (CH)
(72) Erfinder: Grimbacher, Carolin, 6341 Baar (CH); Zweifel, Laura, 6341 Baar (CH); Hermann, Michael, 6341 Baar (CH)
(74) Vertreter: Christ, Niko

(57) **Zusammenfassung**

Bei der Herstellung von Verpackungen mit einer Papierbahn und einer mit dieser physikalisch verbundenen Kunststofffolie kann es dazu kommen, dass die Herstellparameter wie die Hitze zur Erwärmung der Kunststofffolie, der Druck der Verpressung oder auch die verwendeten Materialien nicht geeignet sind und es an der Verpackung beim Abpeelen der Papierbahn zu Papierriss kommt. Dies ergibt unschöne Stellen an der Siegelnaht, die im Sinne einer gleichmäßigen und sicheren Verbindung und zur Vereinfachung der Bedienung des Produkts, sowie zu dessen verbesserter Anmutung vermieden werden sollen. Es soll daher eine Objektivierung der Qualität der Siegelnaht ermöglicht werden, wofür bereits Ansätze bestehen.

Es wird hierfür vorgesehen, dass nach dem Abpeelen eines Testprodukts die Siegelnaht mit einem bildgebenden Verfahren erfasst und das hierbei entstehende Bild ausgewertet wird. Das Bild wird auf die Erkennung von Papierfasern hin geprüft, wobei eine Siegelnaht als gut eingestuft wird, wenn die Anzahl der als Papierfasern eingestuften Elemente einen ersten Faserschwellwert nicht überschreitet.

## Beschreibung

Die vorliegende Erfindung betrifft ein Verfahren zur Qualitätsprüfung an einer Siegelnaht zwischen einer Papierbahn und einer Kunststofffolie.

In der Medizinbranche werden häufig Verpackungen aus einer Kombination von tiefgezogener Kunststofffolie und glatter Papierbahn hergestellt. Dieses sogenannte Sterilbarrieresystem ist die Mindestverpackung, die das Eindringen von Mikroorganismen verhindert und die aseptische Entnahme des Produktes am Verwendungsort ermöglicht. Die Verbundfolie ist in der Praxis eine absolute Barriere, also undurchlässig für Luft, Dampf und Gase, sowie für die typischen Keimträger, Staub und Flüssigkeiten. Das Papier ist eine wirksame Barriere gegen Flüssigkeiten und Staub, also Keimträger, aber gleichzeitig auch permeabel für Luft, Dampf und Sterilisiergase. Das Sterilgut, das in diesem Sterilbarrieresystem verpackt wird, wird samt der Verpackung sterilisiert. Die Sterilisationsverfahren, die dabei angewendet werden, sind Sterilisation mit feuchter oder trockener Hitze oder mit ionisierender Strahlung, insbesondere mit Beta- beziehungsweise Elektronenstrahlen, Gammastrahlen oder Röntgenstrahlen, Niedertemperatur-Sterilisationsverfahren unter Verwendung von Ethylenoxid, Dampf-Formaldehyd oder die Wasserstoffperoxid-Plasmasterilisation.

Um das Sterilgut aus der Verpackung entnehmen zu können, wird die Papierbahn von der Kunststofffolie getrennt. Beim Trennen der beiden Materialien werden aus der Papiermatrix Fasern ausgerissen und verbleiben auf der Siegelnaht. Dies wird als Papierfaserriss bezeichnet. Dabei kann es sein, dass auch einzelne Papierfasern lose aufliegen und so ein Kontaminationsrisiko des Sterilguts darstellen. Die bisherige Beurteilung des Faserrisses erfolgt ausschließlich in subjektiver Form durch das Personal bei der Qualitätsprüfung. Der Papierfaserriss kann entweder an der fertigen Verpackung oder an einer im Labor hergestellten Siegelnaht geprüft werden. Dabei wird das Augenmerk hauptsächlich auf die Anzahl der Fasern, die aus der Papiermatrix ausgerissen werden, und die Verteilung der Fasern auf der gesamten Siegelnaht, gelegt. Je nach Erfahrung des Prüfers kann dabei ein- und dieselbe Verpackung allerdings unterschiedliche Analyseergebnisse erhalten.

Vor diesem Hintergrund liegt der vorliegenden Erfindung die Aufgabe zugrunde, ein Verfahren zur Qualitätsprüfung an einer Siegelnaht zu schaffen, welches die Beurteilung des Papierfaserrisses objektiviert und quantifiziert, um eindeutige Prüfergebnisse zu erhalten.

Gelöst wird diese Aufgabe durch ein Verfahren zur Qualitätsprüfung an einer Siegelnaht zwischen einer Papierbahn und einer Kunststofffolie gemäß den Merkmalen des unabhängigen Anspruchs 1. Weitere sinnvolle Ausgestaltungen eines solchen Verfahrens können den sich anschließenden abhängigen Ansprüchen entnommen werden.

Vorgesehen ist in diesem Zusammenhang ein Verfahren zur Qualitätsprüfung an einer Siegelnaht zwischen einer Papierbahn und einer Kunststofffolie, welche durch Schmelzen der Kunststofffolie und Umfließen von Papierfasern der Papierbahn mit langkettigen Molekülen der geschmolzenen Kunststofffolie, sowie eine anschließende gegenseitige Verpressung hergestellt ist, wobei die Papierbahn zunächst von der Kunststofffolie durch Abpeelen getrennt und ein Rückstand von Papierfasern der Papierbahn auf der Kunststofffolie mithilfe eines bildgebenden Verfahrens erfasst und ein hierdurch entstehendes Bild elektronisch ausgewertet wird. Ein solches Verfahren ist erfindungsgemäß dadurch gekennzeichnet, dass im Rahmen der elektronischen Auswertung zusammenhängende Bereiche des entstehenden Bilds als Papierfasern erfasst werden, wobei ein Bereich der Kunststofffolie mit der Siegelnaht betrachtet und die Siegelnaht als gut eingestuft wird, wenn die Anzahl von Papierfasern, welche eine Größe oberhalb eines Größenschwellwerts aufweisen, unterhalb eines ersten Faserschwellwerts liegt.

Wie bereits zuvor bei der individuellen Auswertung durch das Personal erfolgt die Beurteilung zunächst nach dem Kriterium der Anzahl der Papierfasern. Durch das bildgebende Verfahren und die anschließende elektronische Auswertung kann die Anzahl der Papierfasern bestimmt werden, indem jeweils zusammenhängende Bereiche entlang der Siegelnaht als Papierfasern betrachtet werden. Eine Zählung wird damit aufgrund eines solchen bildgebenden Verfahrens ermöglicht. Dabei ist aber auch erheblich, was bereits als Papierfaser gezählt wird. Hierzu muss gleichzeitig eine Mindestgröße der Papierfaser erreicht werden. Liegt die Anzahl der erfassten Papierfasern unterhalb des genannten ersten Faserschwellwerts, so kann insoweit der Faserriss als gut eingestuft werden. Aufgrund der Abzählung der Papierfasern ist eine klare Objektivierung möglich, so dass klare Zahlen vorliegen, welche durch die Einführung des ersten Faserschwellwerts zu einer klaren Einteilung in gut und schlecht führen.

in konkreter Ausgestaltung kann vorgesehen sein, dass das entstehende Bild in Pixel zerlegt und eine Pixelanzahl jeder Papierfaser gezählt wird, wobei die Größe der Papierfasern in Pixeln erfasst wird und nur die Papierfasern mit einer Pixelanzahl oberhalb eines Pixelschwellwerts zur Anzahl von Papierfasern beitragen.

Das bildgebende Verfahren liefert ein Bild mit einer bestimmten Auflösung. Da ein solches bildgebendes Verfahren immer auch zusätzliche Spuren, Reflexionen, Unreinheiten und sonstige Fehler aufweisen kann und nicht alle sichtbaren Punkte auf unerwünschte Papierfasern zurückzuführen sind, kann eine Einteilung der zusammenhängenden Bereiche nach der Anzahl der zu dem jeweiligen Bereich gehörenden Pixel erfolgen.

In bevorzugter Ausgestaltung kann eine Kontur der Siegelnaht erfasst und zwischen einem Innenbereich innerhalb der Kontur der Siegelnaht und einem Au-ßenbereich außerhalb der Kontur der Siegelnaht unterschieden werden, wobei die Zählung von Pixeln lediglich innerhalb des Innenbereichs der Kontur vorgenommen wird. Dies erlaubt eine separate Betrachtung des Innenbereichs und des Außenbereichs. In dem Innenbereich erfolgt der gewünschte Weißbruch durchgehend, es ist also gewünscht, dass eine gewisse Anhaftung an der Siegelnaht zurückbleibt. Erfolgt in Bereichen keine Anhaftung an der Siegelnaht, so ist diese nicht vollständig abgedichtet und ist ebenfalls zu beanstanden.

Entsprechend kann eine Siegelnaht als gut eingestuft werden, wenn die Anzahl im Außenbereich erfasster Papierfasern, welche eine Größe oberhalb eines Größenschwellwerts aufweisen, unterhalb eines zweiten Faserschwellwerts liegt. Da im Außenbereich vorhandene Papierfasern nicht aufgrund des Anhaftens an der Siegelnaht, sondern mehr oder minder ausschließlich aufgrund des Faserrisses festgestellt werden, sind diese Papierfasern grundsätzlich anders zu bewerten. Konkret kann hier ohne einen unteren Schwellwert gearbeitet werden und bereits kurze Fasern können als unerwünscht eingestuft und in die Zählung aufgenommen werden.

Im Rahmen der konkreten Bildauswertung kann vorgesehen sein, dass eine Farbintensität der Pixel erfasst wird und Pixel nur dann als Papierfasern erfasst werden, wenn die Intensitäten der Rot-, Gelb- und Blauanteile jeweils innerhalb eines vorgegebenen Bereichs liegen, vorzugsweise in ihrer Gesamtheit einen vorgegebenen Weißgrad aufweisen.

Während prinzipiell die Papierfasern alle Farben aufweisen können, also nicht auf die Farbe Weiß festgelegt sind, ist jedoch gerade im medizinischen Bereich die Farbe Weiß vorherrschend. Allgemein gesprochen kann also bei der Bildauswertung auf die Farbintensität abgestellt werden, in aller Regel betrifft dies jedoch aufgrund der üblichen Farbwahl einen Weißgrad.

Bevorzugtermaßen kann vorgesehen sein, dass im Rahmen einer Bilderkennung eine Faserlänge der Papierfasern erfasst wird, wobei nur solche Papierfasern bei der Zählung erfasst werden, deren Faserlängen innerhalb eines vorgegebenen Faserlängenbereichs liegen.

Die Erfassung der Faserlängen erfolgt ebenfalls durch eine geeignete Bilderkennungssoftware, wobei hier die Problematik besteht, dass die Fasern geknickt vorliegen können. Ob sich zwei Fasern berühren oder ob sie geknickt sind, ist hierbei für die Software nicht zu erkennen, so dass die Auswertung ausschließlich auf diesem Weg nicht als ausreichend angesehen wird. Zur Ergänzung des Verfahrens eignet sich dieser Schritt jedoch durchaus.

Ferner kann die Siegelnaht nur dann als gut eingestuft werden, wenn gleichzeitig innerhalb der Kontur alle Bereiche eine Mindestanzahl oder einen Mindestanteil von Papierfasern pro Fläche aufweisen. Es ist hierbei von Bedeutung, ob die ausgerissenen Papierfasern gleichmäßig auf der Fläche der Siegelnaht verteilt sind, oder ob sie unregelmäßig in den sogenannten Faserwolken vorliegen. Angestrebt wird sowohl eine geringe Zahl an Fasern, als auch eine gleichmäßige Verteilung über die Siegelnaht und möglichst ausschließlich dort.

Zur weiteren Objektivierung des Verfahrens kann vorgesehen sein, dass das Abpeelen der Papierbahn maschinell mit definierter Öffnungsgeschwindigkeit und definiertem Öffnungswinkel erfolgt. Hierdurch werden nachvollziehbare Ergebnisse erzielt und Veränderungen von Produktionsparametern können an der Qualität der Siegelnaht nachvollzogen werden. Die Möglichkeit, klare Rückschlüsse von Veränderungen im Produktionsprozess auf die Qualität der Siegelnaht erfassen zu können, lässt eine zielgerichtete Produktentwicklung zu.

Ferner kann es sinnvoll sein, wenn der Kunststofffolie zur Aufnahme des Bilds ein dunkler und/oder matter Hintergrund zugeordnet, vorzugsweise die Kunststofffolie auf einem dunklen Tonpapier befestigt wird. Die Siegelnaht auf der Kunststofffolie mit den darauf befindlichen Papierfasern kann daher vor der Bilderfassung auf einem schwarzen Untergrund wie Tonpapier, Plexiglas, Glas oder ähnlichem sauber fixiert werden, um einen deutlichen Kontrast zu den zumeist weißen Papierfasern herzustellen.

Bei den daran anschließenden bildgebenden Verfahren kann es sich weiter um eine Fotografie oder einen Scan, vorzugsweise einen Flachbettscan, handeln.

Die vorstehend beschriebene Erfindung wird im Folgenden anhand eines Ausführungsbeispiels näher erläutert.

Es zeigen
- Figur 1: eine medizinische Sterilgutverpackung mit einer Siegelnaht, welche eine tiefgezogene Kunststofffolie mit einer Papierbahn verbindet, in einer perspektivischen Darstellung von schräg oben,
- Figur 2: die Sterilgutverpackung gemäß Figur 1 mit einer teilweise abgepeelten Papierbahn in einer perspektivischen Darstellung von schräg unten,
- Figur 3: ein Detail der von der Papierbahn befreiten Kunststofffolie mit einem Abschnitt der Siegelnaht,
- Figur 4: ein Bild der Siegelnaht, welches durch ein bildgebendes Verfahren zur Auswertung bereitgestellt wird, sowie
- Figur 5: eine Verteilung der Papierfasern nach Weißgrad entlang dem Bild der Figur 4.

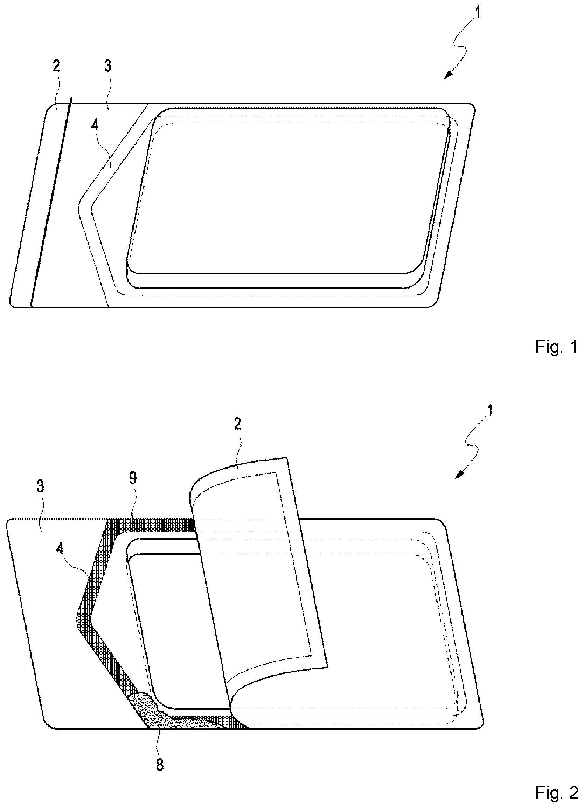

Figur 1 zeigt eine medizinische Sterilverpackung 1, welche im Wesentlichen eine tiefgezogene Kunststofffolie 3 aufweist, welche durch eine Papierbahn 2 rückseitig abgeschlossen ist. In dem Tiefziehbereich der Kunststofffolie 3 ist dadurch ein Raum zur Aufnahme eines steril verpackten Produkts freigehalten, welches beispielsweise durch die Papierbahn 2 hindurch sterilisiert werden kann. Die Papierbahn 2 ist physikalisch mit der Kunststofffolie 3 verbunden, indem die Kunststofffolie 3 im Bereich einer entstehenden Siegelnaht 4 erhitzt und angeschmolzen wird, so dass die langkettigen Moleküle der geschmolzenen Folie die Papierfasern umfließen und dabei eine mechanische, dichte Verbindung herstellen.

Beim Öffnen der Sterilverpackung 1 wird dann die Papierbahn 2 unter einem bestimmten Öffnungswinkel abgepeelt. Dieser Öffnungsvorgang kann mechanisiert werden, um die wirkenden Kräfte nachvollziehbar und reproduzierbar zu machen. Beim Peelen ist es vorgesehen, dass ein Weißbruch 9 auf der Siegelnaht 4 verbleibt, da die bei dem Verschließen umflossenen Papierfasern mit der Kunststofffolie 3 verbunden bleiben. Es sollen jedoch keine unnötigen zusätzlichen Papierfasern 8 zurückbleiben. Die Anzahl der tatsächlich zurückbleibenden Papierfasern 8 ist ein Maß für die Qualität der Verbindung, da die zurückbleibenden Papierfasern 8 das sterile Produkt wieder verunreinigen können und daher möglichst nur Weißbruch 9 zurückbleiben soll.

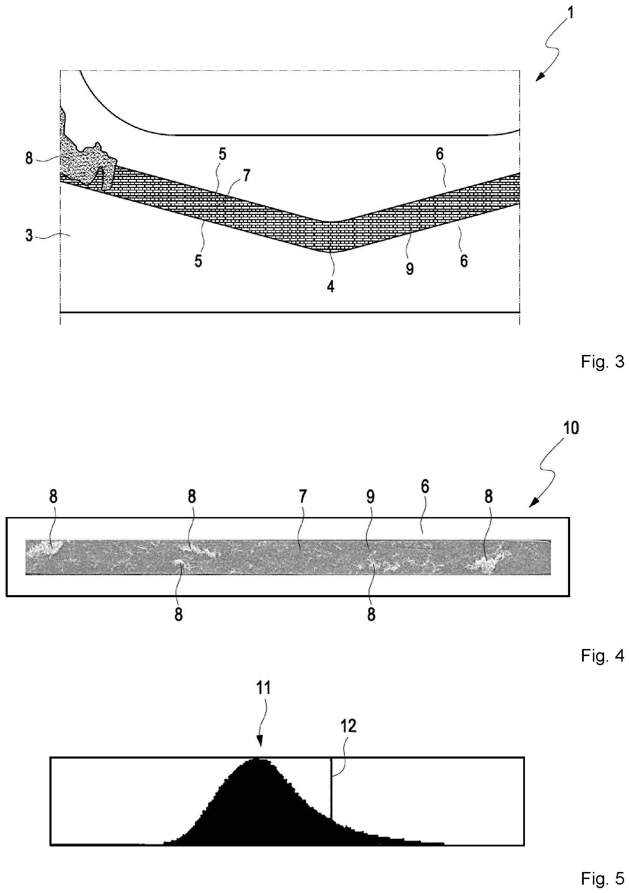

Im Detail der Figur 3 ist dies besser zu erkennen. Die Kunststofffolie 3 weist eine Siegelnaht 4 auf, welche im Innenbereich 7 zwischen zwei Konturen 5 Papierfasern 8 bindet. Hierbei handelt es sich nicht um eine gleichmäßige Verteilung, vielmehr sind am linken Bildrand größere Papierfasern 8 vorhanden, die eine Faserwolke bilden und an der Siegelnaht 4 anhaften. Der Faserriss ist hierbei sogar so groß, dass die Papierfasern 8 in einen Außenbereich 6 hineinragen. Eine derartige Siegelnaht wird nun näher untersucht um festzustellen, ob die Verbindung als gut oder als schlecht einzustufen ist. Hierzu wird die Kunststofffolie 3 zunächst auf einen dunklen Untergrund fixiert, um einen ausreichenden Kontrast zwischen den Papierfasern 8 und dem Hintergrund zu erhalten. Die auf dem Hintergrund fixierte Kunststofffolie 3 wird dann in einem Flachbettscanner gescannt und das Bild 10 durch eine Auswertesoftware ausgewertet.

Das hierbei entstandene Bild 10 ist in der Figur 4 wiedergegeben. Die Auswertung sieht zunächst vor, das Bild 10 in Pixel zu zerlegen und die Papierfasern 8 zu zählen, welche als hellere Flecken auf dem Bild 10 erscheinen. Als Papierfasern 8 werden hierbei nur solche Flecken angesehen, welche sowohl hinsichtlich ihrer Größe einen Größenschwellwert überschreiten, als auch eine entsprechende Farbintensität, hier des Weißgrads, besitzen, was auf die Dicke der Papierfaser 8 schließen lässt. Ebenfalls wird geprüft, ob die Verteilung gleichmä-ßig ist, also erfasst, wie viele Fasern pro Fläche der Siegelnaht 4 vorhanden sind.

Ein Teilergebnis ist in Form einer Verteilung 11 in Figur 5 dargestellt. Hier ergibt sich, dass das Integral unter der Verteilungskurve oberhalb des ersten Faserschwellwerts ergibt, dass 12 % der Fläche der Siegelnaht mit Papierfasern 8 belegt sind. Zusammen mit den weiteren anzulegenden Kriterien und einer Gewichtung dieser unterschiedlichen Kriterien kann dann objektiv die Qualität der Siegelnaht 4 bestimmt werden und aufgrund der verwendeten Schwellwerte definiert werden, wann eine Siegelnaht 4 als gut oder als schlecht eingestuft werden kann.

Vorstehend beschrieben ist somit ein Verfahren zur Qualitätsprüfung an einer Siegelnaht, welches die Beurteilung des Papierfaserrisses objektiviert und quantifiziert, um eindeutige Prüfergebnisse zu erhalten.

### BEZUGSZEICHENLISTE

- 1: Sterilgutverpackung
- 2: Papierbahn
- 3: Kunststofffolie
- 4: Siegelnaht
- 5: Kontur
- 6: Außenbereich
- 7: Innenbereich
- 8: Papierfasern
- 9: Weißbruch
- 10: Bild
- 11: Faserverteilung
- 12: erster Faserschwellwert

## Patentansprüche

1. Verfahren zur Qualitätsprüfung an einer Siegelnaht (4) zwischen einer Papierbahn (2) und einer Kunststofffolie (3), welche durch Schmelzen der Kunststofffolie (3) und Umfließen von Papierfasern (8) der Papierbahn (2) mit langkettigen Molekülen der geschmolzenen Kunststofffolie (3), sowie eine anschließende gegenseitige Verpressung hergestellt ist, wobei die Papierbahn (2) zunächst von der Kunststofffolie (3) durch Abpeelen getrennt und ein Rückstand von Papierfasern (8) der Papierbahn (2) auf der Kunststofffolie (3) mithilfe eines bildgebenden Verfahrens erfasst und ein hierdurch entstehendes Bild (10) elektronisch ausgewertet wird, indem zusammenhängende Bereiche des entstehenden Bilds (10) als Papierfasern (8) erfasst werden, wobei ein Bereich der Kunststofffolie (3) mit der Siegelnaht (4) betrachtet und die Siegelnaht (4) als gut eingestuft wird, wenn die Anzahl von Papierfasern (8), welche eine Größe oberhalb eines Größenschwellwerts aufweisen, unterhalb eines ersten Faserschwellwerts (12) liegt.

2. Verfahren gemäß Anspruch 1, **dadurch gekennzeichnet, dass** das entstehende Bild (10) in Pixel zerlegt und eine Pixelanzahl jeder Papierfaser (8) gezählt wird, wobei die Größe der Papierfasern (8) in Pixeln erfasst wird und nur die Papierfasern (8) mit einer Pixelanzahl oberhalb eines Pixelschwellwerts zur Anzahl von Papierfasern (8) beitragen.

3. Verfahren gemäß einem der Ansprüche 1 oder 2, **dadurch gekennzeichnet, dass** eine Kontur (5) der Siegelnaht (4) erfasst und zwischen einem Innenbereich (7) innerhalb der Kontur (5) der Siegelnaht (4) und einem Außenbereich (6) außerhalb der Kontur (5) der Siegelnaht (4) unterschieden wird, wobei die Zählung von Pixeln lediglich innerhalb des Innenbereichs (7) der Kontur (5) vorgenommen wird.

4. Verfahren gemäß Anspruch 3, **dadurch gekennzeichnet, dass** eine Siegelnaht (4) als gut eingestuft wird, wenn die Anzahl im Außenbereich (6) erfasster Papierfasern (8), welche eine Größe oberhalb eines Größenschwellwerts aufweisen, unterhalb eines zweiten Faserschwellwerts liegt.

5. Verfahren gemäß einem der Ansprüche 2 bis 4, **dadurch gekennzeichnet, dass** eine Farbintensität der Pixel erfasst wird und Pixel nur dann als Papierfasern (8) erfasst werden, wenn die Intensitäten der Rot-, Gelb- und Blauanteile jeweils innerhalb eines vorgegebenen Bereichs liegen, vorzugsweise in ihrer Gesamtheit einen vorgegebenen Weißgrad aufweisen.

6. Verfahren gemäß einem der Ansprüche 2 bis 5, **dadurch gekennzeichnet, dass** im Rahmen einer Bilderkennung eine Faserlänge der Papierfasern (8) erfasst wird, wobei nur solche Papierfasern (8) erfasst werden, deren Faserlängen innerhalb eines vorgegebenen Faserlängenbereichs liegen.

7. Verfahren gemäß einem der vorhergehenden Ansprüche, **dadurch gekennzeichnet, dass** die Siegelnaht (4) nur dann als gut eingestuft wird, wenn gleichzeitig innerhalb der Kontur (5) alle Bereiche eine Mindestanzahl oder einen Mindestanteil von Papierfasern (8) pro Fläche aufweisen.

8. Verfahren gemäß einem der vorhergehenden Ansprüche, **dadurch gekennzeichnet, dass** das Abpeelen der Papierbahn (2) maschinell mit definierter Öffnungsgeschwindigkeit und definiertem Öffnungswinkel erfolgt.

9. Verfahren gemäß einem der vorhergehenden Ansprüche, **dadurch gekennzeichnet, dass** der Kunststofffolie (3) zur Aufnahme des Bilds (10) ein dunkler und/oder matter Hintergrund zugeordnet, vorzugsweise die Kunststofffolie (3) auf einem dunklen Tonpapier befestigt wird.

10. Verfahren gemäß einem der vorhergehenden Ansprüche, **dadurch gekennzeichnet, dass** als bildgebendes Verfahren eine Fotografie oder ein Scan, vorzugsweise ein Flachbettscan, eingesetzt wird.

11. Verfahren gemäß einem der vorhergehenden Ansprüche, **dadurch gekennzeichnet, dass** die Papierbahn (2) und die Kunststofffolie (3) eine medizinische Sterilgutverpackung (1) bilden, wobei die Kunststofffolie (3) vorzugsweise zur Aufnahme eines Sterilguts tiefgezogen ist.
